# EUROPÄISCHE PATENTSCHRIFT

(11) **EP 1 323 296 B1**
(45) Veröffentlichungstag und Bekanntmachung des Hinweises auf die Patenterteilung: **26.03.2008**
(21) Anmeldenummer: 01986823.1
(22) Anmeldetag: 29.09.2001
(51) Int. Cl.: H04N 5/253, H04N 5/232

(54) **VORRICHTUNG ZUR KORREKTUR VON BILDSTANDSFEHLERN IN EINEM VIDEOSIGNAL**
DEVICE FOR CORRECTING STILL IMAGE ERRORS IN A VIDEO SIGNAL
DISPOSITIF POUR LA CORRECTION D'ERREURS DE STABILITE D'IMAGE DANS UN SIGNAL VIDEO

(30) Priorität: 06.10.2000 DE 10049453
(43) Veröffentlichungstag der Anmeldung: 02.07.2003
(73) Patentinhaber: BTS Holding International B.V., 4827 HG Breda (NL)
(72) Erfinder: LEONARD, Thomas, 58239 Schwerte (DE)
(74) Vertreter: Rossmanith, Manfred
(86) Internationale Anmeldenummer: PCT/EP2001/011295
(87) Internationale Veröffentlichungsnummer: WO 2002/032118

(56) Entgegenhaltungen:
- GB-A- 2 333 413
- YONG CHUL PARK ET AL: "An Adaptive Motion Decision System For Digital Image Stabilizer Based On Edge Pattern Matching" CONSUMER ELECTRONICS, 1992. DIGEST OF TECHNICAL PAPERS. ICCE., IEEE 1992 INTERNATIONAL CONFERENCE ON ROSEMONT, IL, USA 2-4 JUNE 1992, NEW YORK, NY, USA,IEEE, US, 2. Juni 1992 (1992-06-02), Seiten 318-319, XP010102899 ISBN: 0-7803-0479-9
- RINDTORFF H: "BILDSTABILISATION IN CONSUMER-CAMCORDERN FUNKTION UND WIRKUNGSWEISE" FERNSEH UND KINOTECHNIK, VDE VERLAG GMBH. BERLIN, DE, Bd. 49, Nr. 1/2, 1995, Seiten 15-18,20-22, XP000512148 ISSN: 0015-0142

## Beschreibung

Die Erfindung betrifft eine Vorrichtung zur Korrektur von Bildstandsfehlern in einem Videosignal, aufweisend: eine Einrichtung zur Ableitung eines Korrektursignals in Abhängigkeit von Abweichungen in aufeinander folgenden Bildern des zu korrigierenden Videosignals und ein Stellglied mit einem Eingang zum Empfangen des zu korrigierenden Videosignals, einem Stelleingang zum Zuführen des abgeleiteten Korrektursignals und einem Ausgang zur Abgabe des korrigierten Videosignals.

Bei der Projektion und der Abtastung von Filmen sind Bildstandsfehler zu beobachten, die durch ungleichmäßigen Transport des Films während Aufnahme und/oder bei der Projektion bzw. Abtastung entstehen. Die Bildstandsfehler führen zu unerwünschten Bewegungsanteilen, die vom Betrachter als störendes Wackeln des Bildes wahrgenommen werden.

Durch DE 195 36 691 A1 ist beispielsweise ein Verfahren und eine Anordnung zur Korrektur von Bildstandsfehler bei der fernsehmäßigen Abtastung bekannt geworden, bei welchen der Bildanteil im Videosignal hinsichtlich des Bildstandes von einem Korrektursignal korrigiert wird. Dabei wird im einzelnen angegeben, wie durch ein Suchverfahren, das auf der probehalben Verschiebung eines Musterbereichs von einem Bild zum nächsten und der Ermittlung einer Korrelation des Musterbereichs mit dem entsprechenden Bereich des nächsten Bildes beruht, Bewegungsvektoren abgeleitet werden.

Die abgeleiteten Bewegungsvektoren beinhalten jedoch sowohl die Bildstandsfehler als auch die tatsächlich vorhandenen Bewegungen, beispielsweise Bewegungen in der aufgenommenen Szene oder Schwenkbewegungen der Kamera. Diese Komponenten können jedoch nicht eindeutig voneinander getrennt werden. Eine exakte Rekonstruktion des realen Bewegungsablaufes ist daher nicht möglich.

Bei der Betrachtung der im abgetasteten Bild vorhandenen Bewegung kann zwischen einem Standbild und einem Bewegtbild unterschieden werden. Bei einem Standbild fallen Bildstandsfehler schon bei kleiner Amplitude stark auf. Die Anforderungen an die Qualität der Korrektur sind hier besonders hoch. Für diesen Fall kann jedoch das Korrektursignal sehr einfach berechnet werden. Um den Bahnverlauf eines Bildpunktes zu erhalten, sind lediglich die Verschiebungsvektoren kontinuierlich aufzusummieren. Man erhält dann die momentane Position des Bildpunktes. Zur Korrektur wird dieser Bildpunkt von der momentanen Position an eine feste Position des Bildebene verschoben.

Im Falle von Bewegtbildern fallen Bildstandsfehler mit kleiner Amplitude nicht so stark auf. Eine Bildstandskorrektur darf jedoch die reale Bewegung nicht stören.

Aufgabe der vorliegenden Erfindung ist es, eine Vorrichtung nach der eingangs genannten Art anzugeben, welche sowohl zur Korrektur von Bildstandsfehlern für Standbilder als auch für Bewegtbilder geeignet ist und sich dabei weitgehend an die jeweiligen Erfordernisse zur Korrektur anpasst.

Diese Aufgabe wird erfindungsgemäß durch eine Vorrichtung gemäss Anspruch 1 gelöst.

Durch Einfügen eines Filters in den Signalweg eines erzeugten Bewegungsvektorsignals lässt sich der Bildstand von Bildern eines Videosignals wesentlich verbessern. Es ist dabei unerheblich, ob das Videosignal von einer portablen Videokamera oder durch Abtasten eines Kinofilms von einem Filmabtaster stammt.

Bei einer vorteilhaften Ausgestaltung der Erfindung ist vorgesehen,
- dass jeweils mindestens ein Bewegungsvektor (s(k)) aufeinander folgender Bilder dem Filter (8) zugeführt wird,
- dass das Filter (8) mehrere Register (Ri(k)) enthält, denen mindestens ein Bewegungsvektor (s(k)) zuführbar ist und denen eine Zustandgröße (Bi(k)) zugeordnet ist, wenn der jeweilige Registerinhalt gültig ist,
- dass die Inhalte der Register (Ri(k)) mit gesetzter Zustandsgröße bei Eintreffen eines neuen Bewegungsvektors (s(k)) um diesen akkumuliert werden,
- dass die Zustandsgröße (Bi(k)) rückgesetzt wird, wenn die Zustandsgröße vor dem Eintreffen des neuen Bewegungsvektors (s(k)) gesetzt war und der Inhalt des jeweiligen Registers eine vorgegebene Schwelle (D) überschreitet,
- dass der Inhalt eines der Register mit rückgesetzter Zustandsgröße (Bi(k)) auf Null und die Zustandsgröße (Bi(k)) auf Eins gesetzt wird und
- dass aus den Inhalten der Register mit gesetzter Zustandsgröße (Bi(k)) ein Mittelwert gebildet wird, der mit entgegengesetztem Vorzeichen dem Stellglied (9) zugeführt wird.

Die Merkmale des Oberbegriffs des Anspruchs 1 sind aus GB 2 333 413 A bekannt.

Die erfindungsgemäße Einrichtung hat den Vorteil, dass kleine sprunghafte Bewegungen als Folgen der Bildstandsfehler korrigiert werden, während nicht sprunghaft ändernde Bewegungen weitgehend unbeeinflusst bleiben. Ferner werden Bewegungen größerer Amplitude, auch wenn sie schnell sind oder ihre Richtung schnell wechseln, nicht korrigiert. Solche Bewegungen treten beispielsweise bei schnellen Schwenks, Szenenwechseln und gegebenenfalls bei aus dramaturgischen Gründen erwünschten wackelnden Bewegungen auf.

Ausführungsbeispiele der Erfindung sind in der Zeichnung anhand mehrerer Figuren dargestellt und in der nachfolgenden Beschreibung näher erläutert. Es zeigt:
- Fig. 1: eine schematische Darstellung einer erfindungsgemäßen Einrichtung,
- Fig. 2: ein Blockschaltbild des in der Einrichtung nach Fig. 1 angewendeten Filters,
- Fig. 3: eine Darstellung verschiedener Bewegungen von Bildpunkten eines abgetasteten Films und
- Fig. 4: ein Flussdiagramm zur Erläuterung des Filters nach Fig. 2.

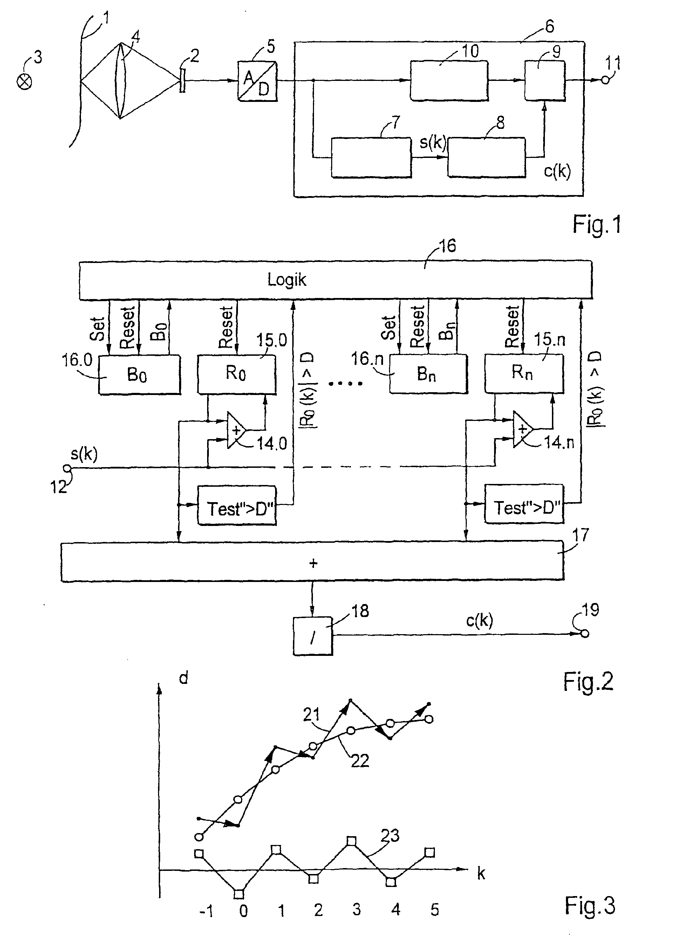

Bei der schematischen Darstellung eines Filmabtasters mit einer erfindungsgemäßen Einrichtung gemäß Fig. 1 wird ein Film 1 mit gleichförmiger Geschwindigkeit an einem oktoelektronischen Sensor 2 vorbeitransportiert. Der Sensor 2 ist beispielsweise eine sogenannte CCD-Zeile. Während des Filmtransports durchleuchtet das Licht einer Lampe 3 den Film 1. Eine Linse 4 fokussiert das durch den Film 1 dringende Licht auf den Sensor 2.

Einem Ausgang des Sensors 2 ist ein analoges bildstandsfehlerbehaftetes Videosignal abnehmbar. Dieses Videosignal wird einem Analog/Digital-Wandler 5 zugeführt, der an seinem Ausgang ein digitales Videosignal abgibt, das der erfindungsgemäßen Einrichtung 6 zur Korrektur von Bildstandsfehlern zugeführt wird.

Der Einfachheit halber ist in Fig. 1 lediglich ein Farbkanal dargestellt, während es bei Filmabtastern üblich ist, für jede Farbkomponente einen Kanal vorzusehen, der dann in gleicher Weise korrigiert werden kann. Dabei entsprechen die Korrektursignale für die Farbkanäle dem Korrektursignal für den Luminanzkanal.

Die Korrektureinrichtung 6 enthält eine Einrichtung 7 zur Ableitung von Bewegungsvektoren, wie sie beispielsweise in DE 195 36 691 A1 beschrieben ist. Die Bewegungsvektoren s(k) werden einem Filter 8 zugeführt, das ein Korrektursignal c(k) erzeugt und einem Stellglied 9 zuführt. Da in den Einrichtungen 7 und 8 Verzögerungen auftreten und somit das Korrektursignal c(k) wesentlich später als das betroffene digitale Videosignal auftritt, werden die digitalen Videosignale bei 10 entsprechend verzögert. Einem Ausgang 11 kann das korrigierte Videosignal entnommen werden.

Das Stellglied 9 besteht im wesentlichen aus einem digitalen Speicher, bei welchem sich die Adressen beim Einschreiben und Auslesen voneinander durch in von dem Korrektursignal c(k) angegebener Weise unterscheiden.

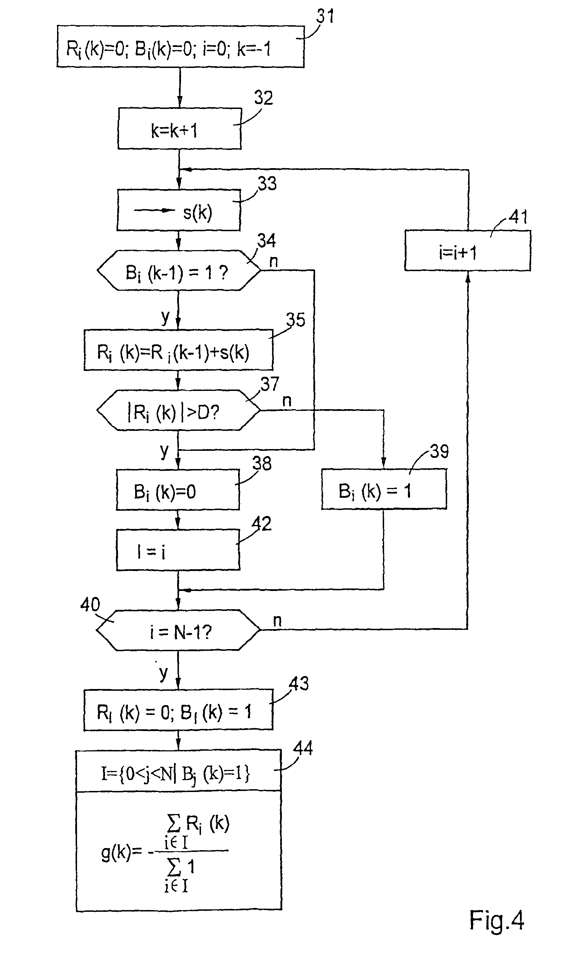

Fig. 2 zeigt in stark vereinfachter Weise die Struktur des Filters 8 (Fig. 1) zur Veranschaulichung als Blockschaltbild. Eine Realisierung des erfindungsgemäßen Filters ist jedoch vorzugsweise als Programm in einem Prozessor vorgesehen, das später im Zusammenhang mit Fig. 4 erläutert wird. Dem Ausführungsbeispiel nach Fig. 2 werden bei 12 die Bewegungsvektoren s(k) zugeführt und in Addierern 14.0 bis 14.n den Inhalten R_0 bis R_n von Registern 15.0 bis 15.n hinzuaddiert. Jedem Register 15.0 bis 15.n ist ein Register 16.0 bis 16.n zugeordnet, in welchem jeweils eine dem jeweiligen Registerinhalt R_0 bis R_n zugeordnete Zustandsgröße B0 bis Bn abgelegt ist.

Eine Logik 16 steuert die Registerinhalte, die mit Hilfe eines Addierers 16 addiert werden. Die Summe wird zur Bildung eines Mittelwertes bei 18 durch die Zahl der zur Addition herangezogenen Register dividiert und mit Eins multipliziert. Das Korrektursignal c(k) kann bei 19 entnommen werden.

Die Zustandsgröße - im folgenden auch Zustandsbit genannt - wird in Abhängigkeit vom Registerinhalt und einem Schwellwert D gesetzt oder rückgesetzt, was im Zusammenhang mit Fig. 4 näher erläutert wird.

Fig. 3 zeigt die Position d eines Bildpunktes oder eines Objektes im abgetasteten Bild als Funktion der Zahl der Abtastungen. Der Übersichtlichkeit halber ist die Darstellung der Bewegung auf eine Komponente beschränkt. Die Kurve 21 zeigt eine Folge von Bewegungsvektoren s(k), wie sie von der Einrichtung 7 (Fig. 1) abgeleitet wird. Die Kurven 22 und 23 stellen die Anteile der tatsächlichen Bewegung (Kurve 22) und der Bildstandsfehler (Kurve 23) dar.

Fig. 4 stellt den Filteralgorithmus in Form eines Flussdiagramms dar. Der Anfangszustand 31 ist R_i(k)=0 und Bi(k)=0 mit i=0 und k=-1. Bei 32 wird k inkrementiert, worauf bei 33 der Bewegungsvektor s(k) eingelesen wird. Bei 34 folgt eine Verzweigung in Abhängigkeit davon, ob Bi(k-1)=1 ist. Ist dieses der Fall (erst nach mindestens einem Durchlauf), wird bei 35 der Registerinhalt R_i(k) akkumuliert. Bei 35 und 36 wird daraufhin geprüft, ob das Zustandsbit Bi(k-1)=1 ist und ob R_i(k)>D ist. Wenn beides der Fall ist, wird Bi(k)=0 gesetzt (37). Anderenfalls wird bei 38 auf 1 gesetzt.

Bei 39 wird geprüft, ob i bereits den größten Wert N-1 erreicht hat, ob nämlich alle Register angesprochen wurden. Solange dieses nicht der Fall ist, wird i bei 40 inkrementiert und das Programm bei 31 fortgesetzt.

Bei 41 wird für das erste der Register mit Bi(k)=0 der Index i als Index 1 abgelegt, damit bei 42 der Registerinhalt R_1 und das dazugehörige Zustandsbit B1(k)=0 gesetzt werden kann. Daraufhin wird bei 43 das Ausgangssignal g(k) berechnet. Dazu wird die Summe derjenigen Registerinhalte gebildet, für die Bi(k)=1 ist, und durch die Anzahl dieser Registerinhalte geteilt. Da ein Verschiebungsvektor aus zwei Komponenten besteht, wird das Filter doppelt realisiert. Der Ergebnisvektor stellt dann ein Korrektursignal dar, das zur Umsteuerung des Bewegungsablaufes benutzt werden kann und die Komponenten gx(k) und gy(k) aufweist.

Eine einfache Realisierung der erfindungsgemäßen Einrichtung kann durch entsprechende Programmierung eines Prozessors erfolgen.

## Patentansprüche

1. Vorrichtung zur Korrektur von Bildstandsfehlern in einem Videosignal mit einer Einrichtung (7) zur Ableitung eines Korrektursignals in Abhängigkeit von Abweichungen in aufeinander folgenden Bildern des zu korrigierenden Videosignals,
mit einem Stellglied (9), das einen Eingang zum Empfangen des zu korrigierenden Videosignals, einen Stelleingang zum Zuführen des abgeleiteten Korrektursignals sowie einen Ausgang (11) zur Abgabe des korrigierten Videosignals aufweist,
mit einem Filter (8), welches an einem Eingang (12) ein den Vektor einer Bewegung zwischen aufeinander folgenden Bildern beschreibendes Bewegungsvektorsignal (s(k)) empfängt, welches aus dem empfangenen Bewegungsvektorsignal (s(k)) ein Korrektursignal (c(k)) ableitet und an einem Ausgang (19) ausgibt,
**dadurch gekennzeichnet,**
- **dass** jeweils mindestens ein Bewegungsvektor (s(k)) der aufeinanderfolgenden Bilder dem Filter (8) zugeführt ist,
- **dass** das Filter (8) mehrere Register (Ri(k)) enthält, denen mindestens ein Bewegungsvektor (s(k)) zuführbar ist und denen eine Zustandsgröße (Bi(k)) zugeordnet ist, wenn der jeweilige Registerinhalt gültig ist,
- **dass** die Inhalte der Register (Ri(k)) mit gesetzter Zustandsgröße bei Eintreffen eines neuen Bewegungsvektors (s(k)) um diesen akkumuliert werden,
- **dass** die Zustandsgröße (Bi(k)) zurückgesetzt wird, wenn die Zustandsgröße vor dem Eintreffen des neuen Bewegungsvektors (s(k)) gesetzt war und der Inhalt des jeweiligen Registers eine vorgegebene Schwelle (D) überschreitet,
- **dass** der Inhalt eines der Register mit zurückgesetzter Zustandsgröße (Bi(k)) auf Null und die Zustandsgröße (Bi(k)) auf Eins gesetzt wird und
- **dass** aus den Inhalten der Register mit gesetzter Zustandsgröße (Bi(k)) ein Mittelwert gebildet wird, der mit entgegengesetztem Vorzeichen dem Stellglied (9) zugeführt wird.

2. Vorrichtung nach Anspruch 1,
**dadurch gekennzeichnet,**
**dass** für jede der Komponenten der Bewegungsvektoren jeweils ein Filter (8) vorgesehen ist.

3. Filmabtaster **gekennzeichnet durch** eine Vorrichtung zur Korrektur von Bildstandsfehlern in einem Videosignal nach Anspruch 1.

4. Tragbare Videokamera **gekennzeichnet durch** eine Vorrichtung zur Korrektur von Bildstandsfehlern in einem Videosignal nach Anspruch 1.

## Claims

1. An apparatus for correcting picture instabilities in a video signal, having a device (7) for deriving a correction signal in a manner dependent on deviations in successive pictures of the video signal to be corrected,
having an actuator (9), which has an input for receiving the video signal to be corrected, a control input for feeding in the derived correction signal and an output (11) for outputting the corrected video signal,
having a filter (8), which receives, at an input (12), a motion vector signal (s(k)) describing the vector of a motion between successive pictures, which derives a correction signal (c(k)) from the received motion vector signal s(k)) and outputs it at an an output (19),
**characterized**
- **in that** in each case at least one motion vector (s(k)) of the successive pictures is fed to the filter (8),
- **in that** the filter (8) contains a plurality of registers (Ri(k)), to which at least one motion vector (s(k)) can be fed and which are assigned a state variable (Bi(k)) if the respective register content is valid,
- **in that** the contents of the registers (Ri(k)) with a set state variable are accumulated by a new motion vector (s(k)) when the latter arrives,
- **in that** the state variable (Bi(k)) is reset if the state variable was set before the arrival of the new motion vector (s(k)) and the content of the respective register exceeds a predetermined threshold (D),
- **in that** the content of one of the registers with a reset state variable (Bi(k)) is set to zero and the state variable (Bi(k)) is set to one, and
- **in that** an average value is formed from the contents of the registers with a set state variable (Bi(k)), said average value being fed to the actuator (9) with an opposite sign.

2. The apparatus as claimed in claim 1, **characterized in that** a respective filter (8) is provided for each of the components of the motion vectors.

3. A film scanner **characterized by** an apparatus for correcting picture instabilities in a video signal as claimed in claim 1.

4. A portable video camera **characterized by** an apparatus for correcting picture instabilities in a video signal as claimed in claim 1.

## Revendications

1. Dispositif pour la correction d'erreurs de stabilité d'image dans un signal vidéo, doté d'un dispositif (7) pour la dérivation d'un signal de correction en fonction d'écarts dans des images consécutives du signal vidéo à corriger,
doté d'un organe de réglage (9) possédant une entrée pour la réception du signal vidéo à corriger, une entrée de réglage pour la transmission du signal de correction dérivé ainsi qu'une sortie (11) pour l'émission du signal vidéo corrigé,
doté d'un filtre (8) qui reçoit à une entrée (12) un signal de vecteur de
mouvement (s(k)) décrivant le vecteur d'un mouvement entre des images consécutives, qui dérive un signal de correction (c(k)) à partir du signal de vecteur de mouvement (s(k)) reçu et le transmet à une sortie (19).
**caractérisé en ce que**
- à chaque fois au moins un vecteur de mouvement (s(k)) des images consécutives est transmis au filtre (8),
- le filtre (8) contient plusieurs registres (Ri(k)) auxquels au moins un vecteur de mouvement (s(k)) peut être transmis et auxquels une variable d'état (Bi(k)) est affectée, lorsque le contenu respectif du registre est valide,
- les contenus des registres (Ri(k)) dont la variable d'état est définie se cumulent, lors de l'apparition d'un nouveau vecteur de mouvement (s(k)), avec celui-ci,
- la variable d'état (Bi(k)) est réinitialisée lorsque la variable d'état a été définie avant l'apparition du nouveau vecteur de mouvement (s(k)) et lorsque le contenu du registre respectif dépasse un seuil prédéfini (D),
- le contenu d'un des registres dont la variable d'état (Bi(k)) est réinitialisée est défini sur zéro et la variable d'état (Bi(k)) sur un, et
- une moyenne est formée à partir des contenus des registres dont la variable d'état (Bi(k)) est définie, laquelle moyenne est transmise à l'organe de réglage (9) avec un signe opposé.

2. Dispositif selon la revendication 1,
**caractérisé en ce que**
pour chacun des composants des vecteurs de mouvement, un filtre (8) est à chaque fois prévu.

3. Appareil de télécinéma **caractérisé par** un dispositif pour la correction d'erreurs de stabilité d'image dans un signal vidéo selon la revendication 1.

4. Caméra vidéo portative **caractérisée par** un dispositif pour la correction d'erreurs de stabilité d'image dans un signal vidéo selon la revendication 1.
